# EUROPEAN PATENT SPECIFICATION

(11) **EP 3 790 700 B1**
(45) Date of publication and mention of the grant of the patent: **07.12.2022**
(21) Application number: 19720137.9
(22) Date of filing: 16.04.2019
(51) Int. Cl.: B23K 9/29

(54) **HANDLE FOR WELDING TORCH AND WELDING TORCH**
HANDGRIFF FÜR SCHWEISSBRENNER UND SCHWEISSBRENNER
POIGNÉE POUR CHALUMEAU DE SOUDAGE ET CHALUMEAU DE SOUDAGE

(30) Priority: 07.05.2018 FI 20185416
(43) Date of publication of application: 17.03.2021
(73) Proprietor: Kemppi Oy, 15810 Lahti (FI)
(72) Inventor: SIVULA, Paavo, 17200 Vääksy (FI); NEUVONEN, Tommi, 00100 Helsinki (FI)
(74) Representative: Boco IP Oy Ab
(86) International application number: PCT/FI2019/050304
(87) International publication number: WO 2019/215382

(56) References cited:
- EP-A2- 0 983 818
- US-A- 4 145 595

## Description

### FIELD OF THE DISCLOSURE

The disclosure relates to welding, and particularly to a welding torch.

### BACKGROUND OF THE DISCLOSURE

Typically, the handle of a TIG (tungsten inert gas) welding torch is made of heat resistant material, such as polyamide. Due to the lever arm of the stiff welding torch, this kind of handle causes strain to the wrist and arm of the welder, resulting in fatigue and pain in the wrist and arm or the welder. The problem occurs even if the cable cover protecting the cable was connected to the handle by a joint piece. Similar strain is also caused by welding in difficult locations where the welding position needs to be changed frequently, even if the cable was made of very flexible material.

Document US 4,145,595 A1 discloses a gas-shielded arc-welding torch constituted by a holder section having a barrel adapted to retain a tungsten electrode and a handle section which supplies electric current to the holder section as well as an inert gas thereto, the holder section being bendable relative to the handle to assume any desired angular working position.

Document EP 0 983 818 A2, that forms the basis for the preamble of claim 1, discloses a TIG welding torch having a spherical joint fitted to the rear of the torch handgrip for connection of the power cable.

This kind of arrangement, however, does not overcome the problem relating to the need for change the welding position. Additionally, the useful life of a torch having a bendable neck is relatively short because of great deformations caused to the structure allowing the bending of the neck, resulting in fractures in the structure.

Another problem relating to the current handles is that they are usually hard and slippery material. Sliding and movement of the welding torch in the hand of the welder, due to the weight and lever arm of the welding torch, can reduce welding quality and may require pausing of the welding sequence. The slippery surface of typical handle material used in torch construction requires more pressure from the hand grip, which increases the strain to the hand and wrist.

There have been attempts to solve the problem relating to the slippery surface for example by adding polyurethane or thermoplastic elastomer regions to hard plastic handles for increasing friction. A hard plastic body is still required in order to pass the standard hot-wire test. A problem with these additional high friction regions is their weak durability against mechanical stress, heat, dirt and sparks. Thus, these regions usually get dirty, wear off or get torn in heavy use. These problems stand out especially when high welding temperatures are used.

### BRIEF DESCRIPTION OF THE DISCLOSURE

An object of the present disclosure is to provide a welding torch so as to overcome the above problems.

The object of the disclosure is achieved by a a welding torch which is characterized by what is stated in the independent claim.

The preferred embodiments of the disclosure are disclosed in the dependent claims.

The disclosure is based on the idea of providing handle for a welding torch for arc welding, wherein the handle is arranged to receive a cable inside the handle and the handle comprises a body made of flexible material, such as silicone rubber, for allowing movement of the distal end of the handle in relation to a proximal end of the handle.

The term welding torch relates to both a welding torch, for example used for tungsten inert gas welding, and a welding gun, for example used for metal inert gas welding.

An advantage of the handle and the welding torch of the disclosure is that the flexible handle of a welding torch allows the cable to bend already within the handle itself, which reduces strain to the arm and wrist, resulting in less fatigue, pain and potential injury in the wrist and the arm of the welder.

The flexible material also provides a better grip from the handle than typical hard polyamide, thus reducing the pressure needed for holding the welding torch.

A flexible handle allows efficient and fast working in situations where welding is performed at locations where the working angle of the handle and neck of the torch need to be changed constantly.

### BRIEF DESCRIPTION OF THE DRAWINGS

In the following the disclosure will be described in greater detail by means of preferred embodiments with reference to the accompanying drawings, in which
Figure 1 is a schematic cross-sectional view of a welding torch according to an embodiment of the disclosure;
Figure 2a illustrates a body of a handle of a welding torch according to an embodiment of the disclosure;
Figure 2b illustrates a first insert of a welding torch according to an embodiment of the disclosure;
Figure 2c illustrates a second insert of a welding torch according to an embodiment of the disclosure;
Figure 2d illustrates a holder and a neck of a welding torch according to an embodiment, wherein a cable has been attached to the neck;
Figure 3 illustrates attachment in detached state of a cable protector to a handle of a welding torch according to an embodiment; and
Figure 4 is a cross sectional view of a handle of a welding torch.

### DETAILED DESCRIPTION OF THE DISCLOSURE

### Handle for welding torch

The disclosure relates to a handle 11 for a welding torch 1 for arc welding, for example tungsten inert gas welding or metal inert gas welding. The handle 11 is arranged to be held by the user of the welding torch 1 during welding.

The welding torch 1 comprises a holder 12 for retaining a welding electrode 2 and for transmitting electric current to the welding electrode 2. For example, in tungsten inert gas welding or metal inert gas welding, the holder 12 also transmits shielding gas to the welding area.

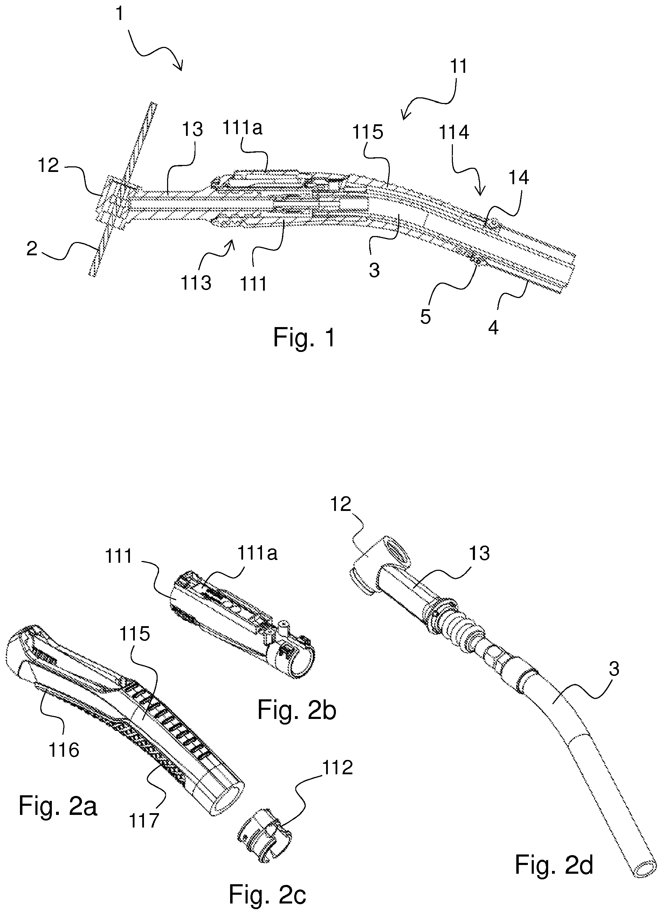

The welding torch 1 comprises a neck 13 attached to the holder 12 for supporting the holder 12 and for transmitting electric current to the holder 12. For example, in tungsten inert gas welding or metal inert gas welding, the neck 13 also transmits shielding gas to holder 12. The neck 13 is arranged to be connected to a cable 3 for transmitting electric current to the neck 13. In tungsten inert gas welding, the cable 3 also transmits shielding gas to the neck 13. The connection between the cable 3 and the neck 13 is illustrated in Figure 2d.

The handle 11 is arranged to be attached to the neck 13 at a distal end 113 of the handle 11. The distal end 113 is an end of the handle 11 located towards the welding area when the welding torch 1 is used for welding. The handle 11 is arranged to receive the cable 3 inside the handle 11. The handle 11 supports both the neck 13 and the cable 3, when the cable 3 is received inside the handle 11 and connected to the neck 13.

The handle 11 comprises a body 115 made of flexible material for allowing movement of the distal end 113 of the handle 11 in relation to a proximal end 114 of the handle 11. In other words, the body 115 is flexible so that it can be bent for allowing the distal end 113 to be moved in relation to the proximal end 114, or vice versa. The proximal end 114 is an end of the handle 11 located opposite the distal end 113. For example, the Shore A hardness of the body is between 30 to 70. According to an embodiment, the handle 11 is made of silicone rubber. Alternatively the handle 11 is made of some other insulating rubber. For example, the body 115 is formed by moulding. The body 115 is illustrated in Figure 2a.

According to an embodiment, the handle 11 comprises a first insert 111 attached to the body 115 at the distal end 113 of the handle 11, wherein the first insert 111 is arranged to be attached to the neck 13. The purpose of the first insert 111 is to facilitate the attachment of the handle 11 to the neck 13. The first insert 111 is made of essentially rigid material, such as plastic. For example, the first insert 111 is attached to the body 115 by positive connection created during moulding of the body 115 at least partially around the first insert 111, or by gluing the first insert 111 and the body 115 together. The first insert 111 is illustrated in Figure 2b.

According to an embodiment, the first insert 111 comprises a trigger 111a for controlling the flow of the electric current. The first insert 111 may also comprise controls (not shown in the figures) for controlling the welding process or a screen (not shown in the figures) for viewing data relating to the welding process.

According to an embodiment, the handle 11 is arranged to be attached to a cable protector 4, or cable cover, at the proximal end 114 of the handle 11. The purpose of the cable protector 4 is to protect the cable 3 from mechanical stresses occurring during welding. Usually the cable protector 4 is made of leather.

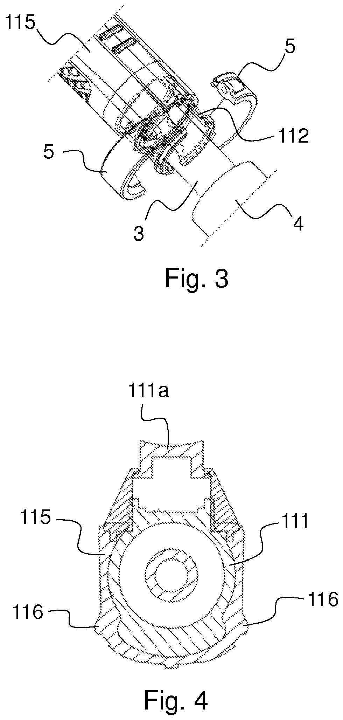

According to an embodiment, the handle 11 comprises a second insert 112 attached to the body 115 at the proximal end 114 of the handle 11, wherein the second insert 112 is arranged to be attached to the cable protector 4. The purpose of the second insert 112 is to facilitate the attachment of the handle 11 to the cable protector 4. The second insert 112 is made of essentially rigid material, such as plastic. For example, the second insert 112 is attached to the body 115 by positive connection during moulding of the body 115 at least partially around the second insert 112, or by gluing the second insert 112 and the body 115 together. For example, the second insert 112 is attached to the cable protector 4 by clamping the cable protector 4 between the second insert 112 and a clamp 5. The second insert 112 is illustrated in Figure 2c. The connection between the second insert 112 and the cable protector 4 is illustrated in fig 3.

According to an alternative embodiment, the handle 11 is arranged to receive a sleeve 14 inside the body 115 at the proximal end 114 of the handle 11. The purpose of the sleeve 14 is to facilitate the attachment of the handle 11 to the cable protector 4. The sleeve 14 is made of essentially rigid material, such as polyamide. The body 115 and the cable protector 4 are arranged to be clamped between the sleeve 14 and a clamp 5, when the handle 11 is attached to the cable protector 4.

According to an embodiment, the handle 11 comprises a pattern 116 on at least part of the external surface of the handle 11 for improving grip on the handle 11. Preferably the pattern 116 is arranged on the surface of the body 115.

According to an embodiment, the handle 11 comprises two lateral protrusions 117 arranged at sides of the handle 11 extending away from each other for improving grip on the handle 11. Preferably the protrusions are arranged to the body 115. The protrusions are illustrated in Figure 4.

### Welding torch

The disclosure relates also to a welding torch 1 for arc welding, for example tungsten inert gas welding.

The welding torch 1 comprises a holder 12 for retaining welding electrode 2 and for transmitting electric current to the welding electrode 2.

The welding torch 1 comprises a neck 13 attached to the holder 12 for supporting the holder 12 and for transmitting electric current to the holder 12. For example, in tungsten inert gas welding or metal inert gas welding, the neck 13 also transmits shielding gas to holder 12. The neck 13 is arranged to be connected to a cable 3 for transmitting electric current to the neck 13. The connection between the cable 3 and the neck 13 is illustrated in Figure 2d. According to an embodiment, the neck 13 comprises a valve (not shown in the figures) for controlling the flow of the shielding gas.

The welding torch 1 comprises a handle 11 attached to the neck 13 at a distal end 113 of the handle 11. The distal end 113 is an end of the handle 11 located towards the welding area when the welding torch 1 is used for welding. The handle 11 is arranged to receive the cable 3 inside the handle 11. The handle 11 supports both the neck 13 and the cable 3, when the cable 3 is received inside the handle 11 and connected to the neck 13.

The handle 11 comprises a body 115 made of flexible material for allowing movement of the distal end 113 of the handle 11 in relation to a proximal end 114 of the handle 11. In other words, the body 115 is flexible so that the distal end 113 can be moved in relation to the proximal end 114, or vice versa. The proximal end 114 is an end of the handle 11 located opposite the distal end 113. According to an embodiment, the handle is made of silicone rubber. For example, the body 115 is formed by moulding. The body 115 is illustrated in Figure 2a.

According to an embodiment, the cable 3 is arranged to transmit shielding gas to the neck 13, the neck 13 is arranged to transmit the shielding gas to the holder 12, and the holder 12 is arranged to transmit the shielding gas to the welding area. The shielding gas is used for example in tungsten inert gas welding.

According to an embodiment, the cable 3 is arranged to transmit cooling fluid, such as cooling liquid or cooling gas, to the neck 13, and the neck 13 is arranged to transmit the cooling fluid to the holder 12.

According to an embodiment, the handle 11 comprises a first insert 111 attached to the body 115 at the distal end 113 of the handle 11, wherein the first insert 111 is arranged to be attached to the neck 13. The purpose of the first insert 111 is to facilitate the attachment of the handle 11 to the neck 13. The first insert 111 is made of essentially rigid material, such as plastic. For example, the first insert 111 is attached to the body 115 by positive connection created during moulding of the body 115 at least partially around the first insert 111, or by gluing the first insert 111 and the body 115 together. The first insert 111 is illustrated in Figure 2b.

According to an embodiment, the first insert 111 comprises a trigger 111a for controlling the flow of the electric current. The first insert 111 may also comprise controls (not shown in the figures) for controlling the welding process or a screen (not shown in the figures) for viewing data relating to the welding process.

According to an embodiment, the handle 11 is arranged to be attached to a cable protector 4, or cable cover, at the proximal end 114 of the handle 11. The purpose of the cable protector 4 is to protect the cable 3 from mechanical stresses occurring during welding. Usually the cable protector 4 is made of leather.

According to an embodiment, the handle 11 comprises a second insert 112 attached to the body 115 at the proximal end 114 of the handle 11, wherein the second insert 112 is arranged to be attached to the cable protector 4. The purpose of the second insert 112 is to facilitate the attachment of the handle 11 to the cable protector 4. The second insert 112 is made of essentially rigid material, such as plastic. For example, the second insert 112 is attached to the body 115 by positive connection during moulding of the body 115 at least partially around the second insert 112, or by gluing the second insert 112 and the body 115 together. For example, the second insert 112 is attached to the cable protector 4 by clamping the cable protector 4 between the second insert 112 and a clamp 5. The second insert 112 is illustrated in Figure 2c. The connection between the second insert 112 and the cable protector 4 is illustrated in fig 3.

According to another embodiment, the welding torch 1 comprises a sleeve 14 arranged inside the body 115 of the handle 11 at the proximal end 114 of the handle 11, wherein the sleeve 14 is made of rigid material, such as polyamide, and the body 115 and the cable protector 4 are arranged to be clamped between the second insert 112 and a clamp 5, when the handle 11 is attached to the cable protector 4.

According to an embodiment, the handle 11 comprises a pattern 116 on at least part of the external surface of the handle 11 for improving grip on the handle 11. Preferably the pattern 116 is arranged on the surface of the body 115.

According to an embodiment, the handle 11 comprises two lateral protrusions 117 arranged at the sides of the handle 11 extending away from each other for improving grip on the handle 11. Preferably the protrusions are arranged to the body 115. The protrusions are illustrated in Figure 4.

## Claims

1. Welding torch (1) for arc welding, comprising
- a holder (12) for retaining a welding electrode (2) and for transmitting electric current to the welding electrode (2),
- a neck (13) attached to the holder (12) for supporting the holder (12) and for transmitting electric current to the holder (12), and
- a handle (11) attached to the neck (13) at a distal end (113) of the handle (11),
wherein
the neck (13) is arranged to be connected to a cable (3) for transmitting electric current to the neck (13), and
the handle (11) is arranged to receive the cable (3) inside the handle (11),
**characterized in that**
the handle (11) comprises a body (115) made of flexible material, such as silicone rubber, for allowing movement of the distal end (113) of the handle (11) in relation to a proximal end (114) of the handle (11).

2. Welding torch (1) according to claim 1, **characterized in that** the handle (11) comprises a first insert (111) attached to the body (115) at the distal end (113) of the handle (11), wherein the first insert (111) is attached to the neck (13).

3. Welding torch (1) according to claim 1 or 2, **characterized in that** the handle (11) is arranged to be attached to a cable protector (4) at the proximal end (114) of the handle (11) for protecting the cable.

4. Welding torch (1) according to claim 3, **characterized in that** the handle (11) comprises a second insert (112) attached to the body (115) at the proximal end (114) of the handle (11), wherein the second insert (112) is arranged to be attached to the cable protector (4).

5. Welding torch (1) according to claim 3, **characterized in that** the welding torch (1) comprises a sleeve (14) arranged inside the body (115) of the handle (11) at the proximal end (114) of the handle (11), wherein the sleeve (14) is made of rigid material, such as polyamide, and the body (115) and the cable protector (4) are arranged to be clamped between the second insert (112) and a clamp (5), when the handle (11) is attached to the cable protector (4).

6. Welding torch (1) according to any one of claims 1 to 5, **characterized in that** the handle (11) comprises a pattern (116) on at least part of the external surface of the handle (11) for improving grip on the handle (11).

7. Welding torch (1) according to any one of claims 1 to 6, **characterized in that** the handle (11) comprises two lateral protrusions (117) arranged at the sides of the handle (11) extending away from each other for improving grip on the handle (11).

## Patentansprüche

1. Schweißbrenner (1) für das Lichtbogenschweißen, umfassend:
- eine Halterung (12) zum Haltern einer Schweißelektrode (2) und zum Übertragen von elektrischem Strom an die Schweißelektrode (2),
- ein an der Halterung (12) angebrachter Hals (13) zum Abstützen der Halterung (12) und zum Übertragen von elektrischem Strom an die Halterung (12), und
- einen Handgriff (11), der an einem fernen Ende (113) des Handgriffs (11) am Hals (13) angebracht ist,
wobei
der Hals (13) eingerichtet ist zum Anschluss an ein Kabel (3) für das Übertragen von elektrischem Strom an den Hals (13), und
der Handgriff (11) eingerichtet ist zur Aufnahme des Kabels (3) im Inneren des Handgriffs (11),
**dadurch gekennzeichnet, dass**
der Handgriff (11) einen aus einem flexiblen Material, wie Silikonkautschuk, gefertigten Körper (115) umfasst, um eine Bewegung des fernen Endes (113) des Handgriffs (11) im Verhältnis zu einem nahen Ende (114) des Handgriffs (11) zu ermöglichen.

2. Schweißbrenner (1) nach Anspruch 1, **dadurch gekennzeichnet, dass** der Handgriff (11) einen ersten Einsatz (111) umfasst, der am fernen Ende (113) des Handgriffs (11) am Körper (115) angebracht ist, wobei der erste Einsatz (111) am Hals (13) angebracht ist.

3. Schweißbrenner (1) nach Anspruch 1 oder 2, **dadurch gekennzeichnet, dass** der Handgriff (11) dazu eingerichtet ist, an einer Kabelschutzvorrichtung (4) am nahen Ende (114) des Handgriffs (11) zum Schutz des Kabels angebracht zu werden.

4. Schweißbrenner (1) nach Anspruch 3, **dadurch gekennzeichnet, dass** der Handgriff (11) einen zweiten Einsatz (112) umfasst, der am nahen Ende (114) des Handgriffs (11) am Körper (115) befestigt ist, wobei der zweite Einsatz (112) dazu eingerichtet ist, an der Kabelschutzvorrichtung (4) angebracht zu werden.

5. Schweißbrenner (1) nach Anspruch 3, **dadurch gekennzeichnet, dass** der Schweißbrenner (1) eine am nahen Ende (114) des Handgriffs (11) im Inneren des Körpers (115) des Handgriffs (11) angeordnete Hülse (14) umfasst, wobei die Hülse (14) aus einem steifen Material, wie Polyamid, gefertigt ist und der Körper (115) und die Kabelschutzvorrichtung (4) so eingerichtet sind, dass sie zwischen dem zweiten Einsatz (112) und einer Klemmvorrichtung (5) geklemmt sind, wenn der Handgriff (11) an der Kabelschutzvorrichtung (4) angebracht ist.

6. Schweißbrenner (1) nach einem der Ansprüche 1 bis 5, **dadurch gekennzeichnet, dass** der Handgriff (11) an mindestens einem Teil der Außenfläche des Handgriffs (11) eine Textur (116) zur Verbesserung der Griffigkeit des Handgriffs (11) aufweist.

7. Schweißbrenner (1) nach einem der Ansprüche 1 bis 6, **dadurch gekennzeichnet, dass** der Handgriff (11) zwei an den Seiten des Handgriffs (11) angeordnete, sich voneinander weg erstreckende seitliche Vorsprünge (117) zur Verbesserung der Griffigkeit des Handgriffs (11) aufweist.

## Revendications

1. Torche de soudage (1) pour le soudage à l'arc, comprenant
- un dispositif de serrage (12) pour retenir une électrode de soudure (2) et pour transmettre un courant électrique à l'électrode de soudure (2),
- un col (13) attaché au dispositif de serrage (12) pour soutenir le dispositif de serrage (12) et pour transmettre un courant électrique au dispositif de serrage (12), et
- une poignée (11) attachée au col (13) à une extrémité distale (113) de la poignée (11),
dans laquelle
le col (13) est agencé pour être connecté à un câble (2) pour transmettre un courant électrique au col (13), et
la poignée (11) est agencée pour recevoir le câble (3) à l'intérieur de la poignée (11),
**caractérisée en ce que**
la poignée (11) comprend un corps (115) fait d'un matériau souple, tel que le caoutchouc de silicone, pour autoriser un mouvement de l'extrémité distale (113) de la poignée (11) par rapport à une extrémité proximale (114) de la poignée (11).

2. Torche de soudage (1) selon la revendication 1, **caractérisée en ce que** la poignée (11) comprend une première pièce insérée (111) attachée au corps (115) à l'extrémité distale (113) de la poignée (11), ladite première pièce insérée (111) étant attachée au col (13).

3. Torche de soudage (1) selon la revendication 1 ou 2, **caractérisée en ce que** la poignée (11) est agencée pour être attachée à un dispositif protecteur de câble (4) à l'extrémité proximale (114) de la poignée (11) pour protéger le câble.

4. Torche de soudage (1) selon la revendication 3, **caractérisée en ce que** la poignée (11) comprend une deuxième pièce insérée (112) attachée au corps (115) à l'extrémité proximale (114) de la poignée (11), ladite deuxième pièce insérée (112) étant agencée pour être attachée au dispositif protecteur de câble (4).

5. Torche de soudage (1) selon la revendication 3, **caractérisée en ce que** la torche de soudage (1) comprend un manchon (14) disposé à l'intérieur du corps (115) de la poignée (11) à l'extrémité proximale (114) de la poignée (11), dans laquelle le manchon (14) est fait d'un matériau rigide, tel que le polyamide, et le corps (115) et le dispositif protecteur de câble (4) sont agencés pour être serrés entre la deuxième pièce insérée (112) et un collier (5) lorsque la poignée (11) est attachée au dispositif protecteur de câble (4).

6. Torche de soudage (1) selon l'une des revendications 1 à 5, **caractérisée en ce que** la poignée (11) comprend un relief (116) dans au moins une partie de la surface extérieure de la poignée (11) pour améliorer la prise en main de la poignée (11).

7. Torche de soudage (1) selon l'une des revendications 1 à 6, **caractérisée en ce que** la poignée (11) comprend deux protubérances latérales (117) disposées des côtés de la poignée (11) qui s'écartent l'une de l'autre pour améliorer la prise en main de la poignée (11).
